# EUROPEAN PATENT SPECIFICATION

(11) **EP 1 287 073 B1**
(45) Date of publication and mention of the grant of the patent: **02.06.2004**
(21) Application number: 01929032.9
(22) Date of filing: 28.03.2001
(51) Int. Cl.: C08L 69/00

(54) **CLEAR POLYCARBONATE BLENDS**
KLARE POLYCARBONATMISCHUNGEN
MELANGES DE POLYCARBONATES TRANSPARENTS

(30) Priority: 01.05.2000 US 561869
(43) Date of publication of application: 05.03.2003
(73) Proprietor: GENERAL ELECTRIC COMPANY, Schenectady, NY 12345 (US)
(72) Inventor: WISNUDEL, Marc, Brian, Clifton Park, NY 12065 (US); DRIS, Irene, Clifton Park, NY 12065 (US); DAVIS, Gary, Charles, Albany, NY 12205 (US); HARIHARAN, Ramesh, Malden MA 02148-2077 (US)
(74) Representative: Szary, Anne Catherine, Dr.
(86) International application number: PCT/US2001/040399
(87) International publication number: WO 2001/083615

(56) References cited:
- EP-A- 0 166 834
- EP-A- 0 402 678
- EP-A- 0 508 716
- US-A- 5 382 489
- US-A- 5 486 577
- US-A- 6 001 953
- KIM, C. K. ET AL: "EFFECTS OF POLYCARBONATE MOLECULAR STRUCTURE ON THE MISCIBILITY WITH OTHER POLYMERS" MACROMOLECULES, AMERICAN CHEMICAL SOCIETY. EASTON, US, vol. 25, no. 12, 8 June 1992 (1992-06-08), pages 3097-3105, XP000269455 ISSN: 0024-9297
- DATABASE WPI Section Ch, Week 197413 Derwent Publications Ltd., London, GB; Class A23, AN 1974-23589V XP002181931 & JP 48 026842 A (SUMITOMO CHEM CO LTD), 9 April 1973 (1973-04-09)

## Description

### FIELD OF THE INVENTION

The present invention relates to clear blends containing a first polycarbonate and a second polycarbonate. The blends of the invention are useful in producing clear articles of manufacture having good properties. These properties include food chemical resistance and melt processibility. These blends are especially useful for making clear molded articles, fibers, films and sheeting.

### BACKGROUND OF THE INVENTION

The polycarbonate of 4,4-isopropylidenediphenol (BPA polycarbonate) is a commonly used engineering molding plastic. BPA polycarbonate has many good physical properties, such as dimensional stability, good heat resistance and good impact strength. For some applications however, better processibility and better chemical resistance is required. This is often achieved by blending two polymers.

Clear miscible blends of any two polymers are rare. The term "miscible" refers to blends that are a mixture on a molecular level where intimate polymer-polymer interactions are achieved. Miscible blends are clear, not translucent or opaque. In addition, differential scanning calorimetry testing detects only a single glass transition temperature, T_{g}, for miscible blends composed of two or more components.

In light of the above, it would be desirable to form clear blends of polymers having good melt processibility suitable for injection molding. Such a blend would be especially suitable for the manufacture of clear molded articles, fibers, sheeting, and film.

### SUMMARY OF THE INVENTION

In one aspect, the invention relates to a clear blend compositions comprising:
A) from 1 to 99% by weight of a first polycarbonate comprising structural units having the formula (I) 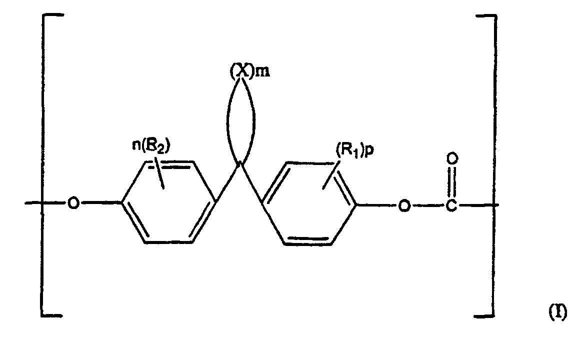 where R₁ and R₂ are independently selected from the group consisting of C₁-C₆ alkyl;
   X represents CH₂;
   m is an integer from 4 to 7;
   n is an integer from 1 to 4; and
   p is an integer from 1 to 4
   with the proviso that at least one of R₁ or R₂ is in the 3 or 3' position; and wherein the structural units of formula (I) comprise from 10 to 100 mole% of the first polycarbonate; and
B) from 1 to 99% by weight of a second polycarbonate comprising structural units having the formula (II) 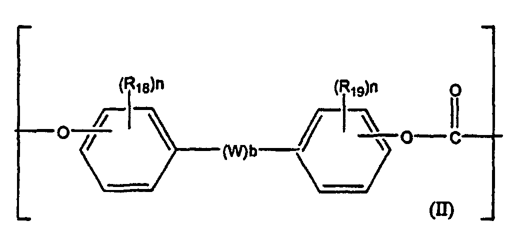 where
   R₁₈ is independently selected from the group consisting of halogen, hydrogen, monovalent C₁-C₆ hydrocarbon, monovalent C₁-C₆ hydrocarbonoxy radicals,
   R₁₉ is independently selected from the group consisting of halogen, hydrogen, monovalent C₁-C₆ hydrocarbon, and monovalent C₁-C₆ hydrocarbonoxy radicals;
   W is selected from the group consisting of substituted or unsubstituted divalent C₁-C₁₈ hydrocarbon radicals,
   -S-, -S-S-, -O-, 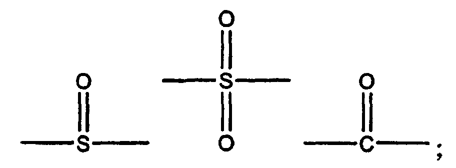
   each n is independently selected from integers having a value of from 0 to 4 inclusive; and b is zero or one; wherein the structural units (II) comprise from about 10 to 100 mole % of the second polycarbonate; and
   wherein the total weight percent of first polycarbonate (A) and second polycarbonate (B) is equal to 100 weight percent.

In a further embodiment of the invention, the second polycarbonate is a polyestercarbonate, the polyestercarbonate, in addition to structural units of formula I, further comprising structural units of formula (V) 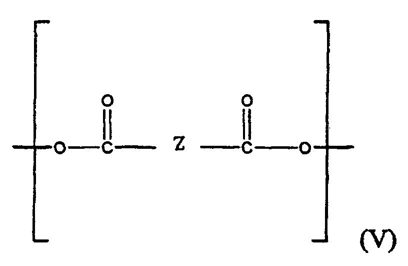 wherein Z is a C₁-C₄₀ branched or unbranched alkyl or branched or unbranched cycloalkyl.

### BRIEF DESCRIPTION OF THE DRAWINGS

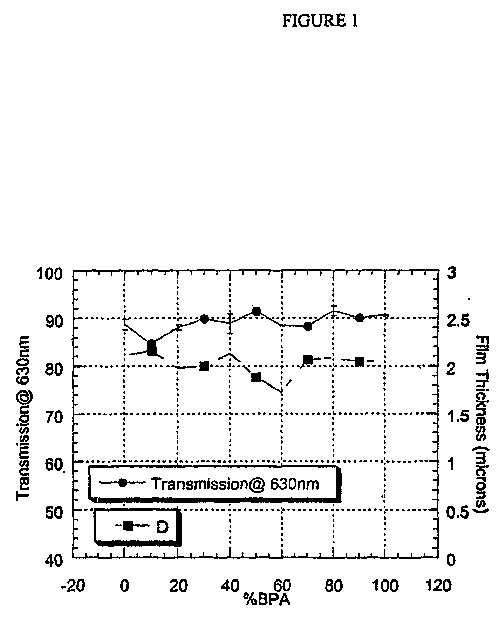

FIGURE 1 illustrates the miscibility of the first and second polycarbonates and that the miscibility is not a result of compatabilization resulting from transesterification products.

### DETAILED DESCRIPTION OF THE INVENTION

The present invention may be understood more readily by reference to the following detailed description of preferred embodiments of the invention and the Examples included therein.

Before the present compositions of matter and methods are disclosed, it is to be understood that this invention is not limited to specific synthetic methods or to particular formulations, as such may, of course, vary. It is also to be understood that the terminology used herein is for the purpose of describing particular embodiments only and is not intended to be limiting.

In this specification and in the claims which follow, reference will be made to a number of terms which shall be defined to have the following meanings.

The singular forms "a," "an" and "the" include plural referents unless the context clearly dictates otherwise.

"Optional" or "optionally" means that the subsequently described event or circumstances may or may not occur, and that description includes instances where the event or circumstance occurs and instances where it does not.

"BPA" is herein defined as bisphenol A or 2,2-bis(4-hydroxyphenyl)propane.

"BCC"' is herein defined as 1,1-bis(4-hydroxy-3-methyl phenyl) cyclohexane.

"Polycarbonate" or "polycarbonates" as used herein includes copolycarbonates, homopolycarbonates and (co)polyester carbonates.

Unless otherwise stated, "mol %" in reference to the composition of a polycarbonate in this specification is based upon 100 mol % of the repeating units of the polycarbonate. For instance, "a polycarbonate comprising 90 mol % of BCC" refers to a polycarbonate in which 90 mol % of the repeating units are residues derived from BCC diphenol or its corresponding derivative(s). Corresponding derivatives include but are not limited to, corresponding oligomers of the diphenols; corresponding esters of the diphenol and their oligomers; and the corresponding chloroformates of the diphenol and their oligomers.

The terms "residues" and "structural units", used in reference to the constituents of the polycarbonate, are synonymous throughout the specification.

Throughout this application where publications are referenced, the disclosures of these publications in their entireties are hereby incorporated by reference into this application in order to more fully describe the state of the art to which this invention pertains.

As mentioned, in one aspect, this invention relates to clear blend compositions suitable for use in preparation of optical articles, the clear blend compositions comprising:
A) from 1 to 99% by weight of a first polycarbonate comprising structural units having the formula (1) 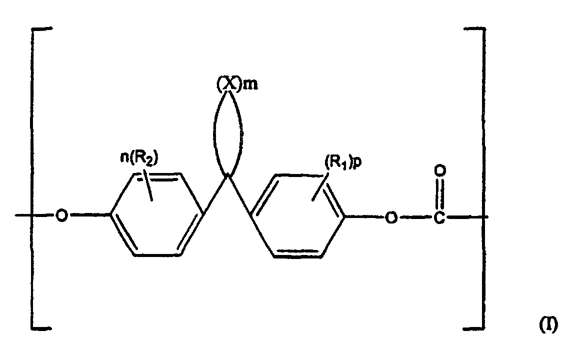 where R₁ and R₂ are independently selected from the group consisting of C₁-C₆ alkyl;
   X represents CH₂;
   m is an integer from 4 to 7;
   n is an integer from 1 to 4; and
   p is an integer from 1 to 4
   with the proviso that at least one of R₁ or R₂ is in the 3 or 3' position; and wherein the structural units of formula (I) comprise from 10 to 100 mole% of the first polycarbonate; and
B) from 1 to 99% by weight of a second polycarbonate comprising structural units having the formula (II) 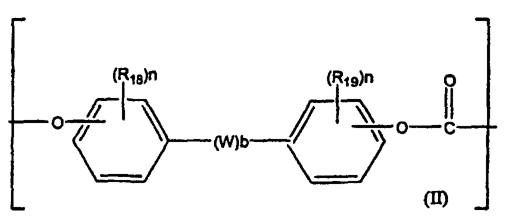 where
   R₁₈ is independently selected from the group consisting of halogen, hydrogen, monovalent C₁-C₆ hydrocarbon, monovalent C₁-C₆ hydrocarbonoxy radicals,
   R₁₉ is independently selected from the group consisting of halogen, hydrogen, monovalent C₁-C₆ hydrocarbon, and monovalent C₁-C₆ hydrocarbonoxy radicals;
   W is selected from the group consisting of substituted or unsubstituted divalent C₁-C₁₈ hydrocarbon radicals,
   -S-, -S-S-, -O-, 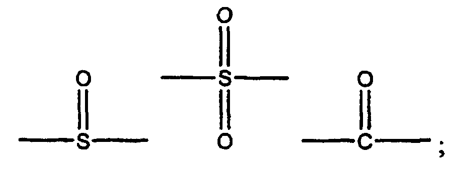
   each n is independently selected from integers having a value of from 0 to 4 inclusive; and b is zero or one; wherein the structural units (II) comprise from about 10 to 100 mole % of the second polycarbonate; and
   wherein the total weight percent of first polycarbonate (A) and second polycarbonate (B) is equal to 100 weight percent.

In a further embodiment, the second polycarbonate is a polyestercarbonate, the polyestercarbonate further comprising, in addition to structural units of formula I, structural units of formula V. 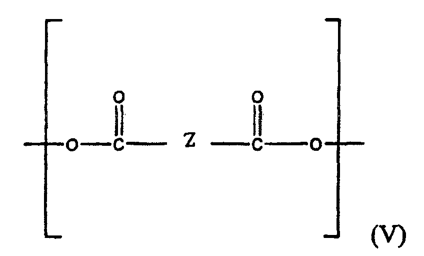 wherein Z is a C₁-C₄₀ branched or unbranched alkyl or branched or unbranched cycloalkyl.

Clear, miscible blends of two polymers are rare. The term "miscible" refers to blends that are a mixture on a molecular level wherein intimate polymer-polymer interaction is achieved. Miscible blends are clear, not translucent or opaque. Differential scanning calorimetry testing detects only a single glass transition temperature (Tg) for miscible blends composed of two or more components. In addition, scanning electron microscopy detects no contrast indicative of immiscible phases. As mentioned, the blends of the present invention are clear. The term "clear" is defined herein as an absence of cloudiness, haziness, and mudiness when inspected visually.

The applicants were very surprised to discover clear, miscible, blends of the polycarbonate of structure (1) and polycarbonates of structure (II). Further, applicants were surprised to discover that these blends possess good properties making them suitable for use in making clear molded articles, fibers, films and sheeting. The blends of the present invention are clear and have good melt processibility suitable for injection molding.

A blending process, as opposed to a copolymerization process, provides advantages. The blending process allows for the production of compositions that are either too expensive or unattainable by a copolymerization process.

The blend composition further provides polycarbonate blends having good optical properties and suitable glass transition temperatures. Suitable glass transition temperatures are necessary to provide adequate processibility, for example good molding characteristics.

In the present invention it is further critical that the blends of the first and second polycarbonate posses suitable properties for processing. The blends of this invention preferably have glass transition temperatures in the range of 100° C to 185° C, more preferably 125° to 165° C, even more preferably 130 to 150° C. The polycarbonate should have light transmittance of at least about 85%, more preferably at least about 90%.

The number average molecular weight (Mn) of the first polycarbonate and the second polycarbonate, as determined by gel permeation chromotography relative to polystyrene, is preferably from about 10,000 to about 100,000, more preferably between about 10,000 to about 50,000, even more preferably between about 12,000 to about 40,000.

The compositions of the particular blend may be varied within certain ranges to achieve the suitable property profile. The blends of the present invention are about 1 to about 99 weight percent of the first polycarbonate portion and about 1 to about 99 weight percent of the second polycarbonate portion, with the total weight percent of the first and second polycarbonate portion preferably equal to 100 weight percent.

The preferred blends of the present invention is from about 20 to about 99 weight percent of the first polycarbonate and from about 1 to about 80 weight percent of the second polycarbonate; more preferably about 40 to about 99 weight percent of the first polycarbonate and about 1 to about 60 weight percent of the second polycarbonate; even more preferably a weight percent of about 45 to about 55 weight percent for both the first and the second polycarbonate.

The particular composition may be adjusted depending on a number of factors including the end use of the blend and the desired properties of the blend. For example, more of the first polycarbonate in the blend helps maintain low water absorption and good birefringence. More of the second polycarbonate in the blend helps maintain good ductility.

Residues of structure I preferably comprises from 10 to 100 mol % of the first polycarbonate, preferably from 30 to 100 mol % of the first polycarbonate, more preferably from 60 to 100 mol % of the second polycarbonate, even more preferably 90 to 100 mole% of the second polycarbonate. In one embodiment, the first polycarbonate consists essentially of residues of structure I.

Representative units structure I include; but are not limited, to residues of 1,1-bis(4-hydroxy-3-methylphenyl)cyclohexane (BCC); 1,1-bis(4-hydroxy-3-methylphenyl)cyclopentane; 1, 1-bis(4-hydroxy-3-methylphenyl)cyclobeptane and mixtures thereof. Residues of BCC are most preferred as structural units I.

In one embodiment of the invention, the first polycarbonate comprises from 90 to 100 mol % of residues of BCC, structure (VI). BCC may be easily synthesized from cyclohexanone and ortho-cresol. 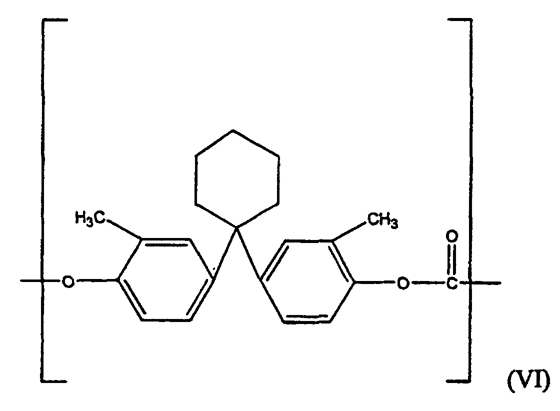 A polycarbonate, comprising 100 mol % of structural units derived from BCC, is herein referred to as "BCC homopolycarbonate". In an even further embodiment, the first polycarbonate consists essentially of residues of BCC.

In the present invention, it is critical that the structural units of formula (I) be substituted in the 3 or 3' position by at least one of R₁ or R₂. It is preferable that n and p are equal to one, and that R₁ and R₂ are present in the 3 and 3' positions, respectively. R₁ and R₂ are preferably C₁-C₆ alkyl, more preferably C₁-C₃ alkyl, even more preferably CH₃.

Residues of structure II preferably comprises from 10 to 100 mol % of the second polycarbonate, preferably from 30 to 100 mol % of the second polycarbonate, more preferably from 60 to 100 mol % of the second polycarbonate, even more preferably 90 to 100 mole% of the second polycarbonate. In one embodiment, the second polycarbonate consists of residues of BPA exclusively, i.e. 100 mol %, based, on 100 mol% of repeating units b) in the polycarbonate.

Representative units of structure II include, but are not limited to, residues of 2,2-bis(4-hydroxyphenyl)propane (BPA); 2,2-bis(4-hydroxyphenyl)butane; 2,2-bis(4-hydroxyphenyl)pentane; 2,2-bis(4-hydroxy-3-methylphenyl)propane; 2,2-bis(3-ethyl-4-hydroxyphenyl)propane; and mixtures thereof. Residues of BPA are preferred as structure II.

Optionally the second polycarbonate may comprise from .1 to 20 mol% of structural units of structure (V): 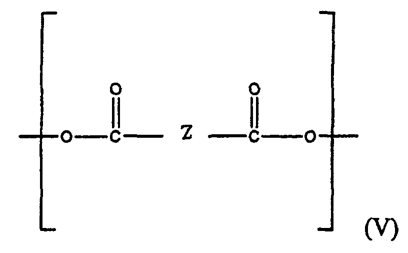 wherein Z is a C₁-C₄₀ branched or unbranched alkyl or branched or unbranched cycloalkyl.

Representative units of structure (V) include, but are not limited to, residues of dodecanedioic acid (DDDA), sebacic acid, adipic acid, octadecanedioic acid, octadec-9-enedioic acid, 9-carboxyoctadecanoic acid and 10-carboxyoctadecanoic acid. Residues of dodecanedioic acid are the more preferred.

In one embodiment, the second polycarbonate comprises at least 60 mol%, more preferably at least 80 mol% of residues of BPA. In a further embodiment, the second polycarbonate comprises at least 60 mol% of residues of BPA, and at least 10 mol %of residues of DDDA. In an even further embodiment, the second polycarbonate comprises from about 60 to 80 mol% of residues of BPA and from about 10 to about 20 mol% of residues of DDDA.

Representative units of structure (V) include, but are not limited to, residues of dodecanedioic acid, sebacic acid, adipic acid, octadecanedioic acid, octadec-9-enedioic acid, 9-carboxyoctadecanoic acid and 10-carboxyoctadecanoic acid. Residues of dodecanedioic acid are the more preferred.

The polycarbonates of the invention may be prepared by the interfacial or the melt process. If the interfacial process is used, the addition of various phase transfer catalysts is optional. Phase transfer catalysts which are suitable include, but are not limited to tertiary amines, such as triethylamine, ammonium salts, such as tetrabutylammonium bromide; or hexaethylguanidium chloride. Monofunctional phenols, such as p-cumylphenol (PCP) and 4-butylphenol; long chain alkylphenols, such as cardanol and nonyl phenol; and difunctional phenols may be used as chain stopping agents. Optionally 1 to 10 mole %, more preferably 4 to 10 mole %, more preferably 4 to 7% of chainstopping agent may be incorporated into the first or second polycarbonate, based on the total moles of the repeating units.

In some instances, the phosgenation conditions must be adjusted. In particular, the phosgenation conditions should be adjusted in cases where the formation of undesired cyclic oligomers is favored by the characteristic reactivity of the monomer, which is related to monomer solubility in the reaction medium and monomer structure. In the case of BCC, for example, cyclic oligomer formation occurs to a greater extent under standard interfacial polymerization conditions than in the case of, for example, BPA. In polycarbonates containing substantial more than about 20 mol% of BCC, it is advantageous to use an excess of phosgene to promote the formation of linear bischloroformate oligomers which are converted to high molecular weight polymers by partial hydrolysis and polycondensation. Preferably from about 20 to 200 mol% of excess phosgene is used.

The polycarbonates of the invention may also be prepared by the melt or transesterification process. This process does not require the use of phosgene or a solvent and minimizes the formation of low molecular weight contaminants, such as cyclic and linear low molecular weight oligomers in the final polymer. The monomers are mixed with a carbonate source, such as a diarylcarbonate, and a small amount of catalyst, such as an alkali metal hydroxide or ammonium hydroxide and heated under a vacuum according to a protocol in which the temperature is raised through a series of stages while the pressure in the headspace over the reaction mixture is lowered from ambient pressure to about 1 torr.

Suitable carbonate sources, catalysts and reaction conditions are found in U.S. Patent 5,880,248, and Kirk -Othmer Encyclopedia of Chemical Technology, Fourth Edition, Volume 19, pp. 585-600, herein incorporated by reference. The time of the stages and the temperature are such that mechanical losses of material through foaming and the like are avoided. Phenol and excess diphenyl carbonate are removed overhead to complete the polymerization process. The product high polymer is then isolated as a melt which may be compounded with other additives, such as stabilizers and mold release agents prior to pelletization. The products produced by the melt process have reduced numbers of undissolved particles and reduced content of low molecular weight contaminants, such as cyclic oligomers, relative to the interfacially produced product.

The clear blends of the present invention may optionally be blended with any conventional additives used in optical applications, including but not limiteu to dyestuffs, UV stabilizers, antioxidants, heat stabilizers, and mold release agents, to form an optical article. In particular, it is preferable to form a blend of the polycarbonate and additives which aid in processing the blend to form the desired optical article. The blend may optionally comprise from .0001 to 10% by weight of the desired additives, more preferably from .0001 to 1.0% by weight of the desired additives.

Substances or additives which may be added to the polycarbonates of this invention, include, but are not limited to, heat-resistant stabilizer, UV absorber, mold-release agent, antistatic agent, slip agent, antiblocking agent, lubricant, anticlouding agent, coloring agent, natural oil, synthetic oil, wax, organic filler, inorganic filler and mixtures thereof.

Examples of the aforementioned heat-resistant stabilizers, include, but are not limited to, phenol stabilizers, organic thioether stabilizers, organic phosphide stabilizers, hindered amine stabilizers, epoxy stabilizers and mixtures thereof. The heat-resistant stabilizer may be added in the form of a solid or liquid.

Examples of UV absorbers include, but are not limited to, salicylic acid UV absorbers, benzophenone UV absorbers, benzotriazole UV absorbers, cyanoacrylate UV absorbers and mixtures thereof.

Examples of the mold-release agents include, but are not limited to natural and synthetic paraffins, polyethylene waxes, fluorocarbons, and other hydrocarbon mold-release agents; stearic acid, hydroxystearic acid, and other higher fatty acids, hydroxyfatty acids, and other fatty acid mold-release agents; stearic acid amide, ethylenebisstearoamide, and other fatty acid amides, alkylenebisfatty acid amides, and other fatty acid amide mold-release agents; stearyl alcohol, cetyl alcohol, and other aliphatic alcohols, polyhydric alcohols, polyglycols, polyglycerols and other alcoholic mold release agents; butyl stearate, pentaerythritol tetrastearate, and other lower alcohol esters of fatty acid, polyhydric alcohol esters of fatty acid, polyglycol esters of fatty acid, and other fatty acid ester mold release agents; silicone oil and other silicone mold release agents, and mixtures of any of the aforementioned.

The coloring agent may be either pigments or dyes. Inorganic coloring agents and organic coloring agents may be used separately or in combination in the invention.

The first and second polycarbonates may be random copolymers, block copolymers or graft copolymers. When graft copolymers and other branched polymers are prepared a suitable branching agent is used during production.

The desired article may be obtained by molding the polycarbonate or polycarbonate blend by injection molding, compression molding, extrusion methods and solution casting methods. Injection molding is the more preferred method of forming the article.

The blends of the invention are useful in producing clear articles of manufacture having good properties. These properties include food chemical resistance and melt processibility. These blends are especially useful for making molded articles, fibers, films and sheeting.

The blends of the present invention can be made by methods which include the steps of blending the first and second polycarbonate at a temperature of from about 240° C to about 300° C for a time sufficient to form a clear blend composition. Suitable methods for forming the blend include, but are not limited to the melt method, the solution prepared method, the dry blending method and coextrusion.

In the coextrusion process, the first and second polycarbonate may be premixed, or alternatively, two feeders may be used. No catalyst or diphenyl carbonate is necessary. Optionally, catalysts may be used.

In addition to the first and second polycarbonate portions described above, the blends of the present invention may include at least one other modifying polymer. Suitable modifying polymers are those which form miscible blends with the first and second polycarbonate portions. Possible modifying polymers include other polycarbonates, polyesters, polyamides, polystyrenes, polyurethanes, polyarylates, liquid crystalline polymers, vinyl polymers and the like, and mixtures thereof. Suitable modifying polymers may be determined by one of ordinary skill in the art by performing traditional miscibility tests with possible modifying polymers.

### EXAMPLES

The following examples are put forth so as to provide those of ordinary skill in the art with a complete disclosure and description of how the compositions of matter and methods claimed herein are made and evaluated, and not intended to limit the scope of what the inventors regard as their invention. Efforts have been made to insure accuracy with respect to numbers (e.g., amounts, temperatures, etc.) but some error and deviations should be accounted for. Unless indicated otherwise, parts are by weight, temperature is in ° C or is at room temperature and pressure is at or near atmospheric.

The materials and testing procedures used for the results shown herein are as follows:

Molecular weights are reported as weight average (Mw) and number average (Mn) and were determined by gel permeation chromotography relative to polystyrene using an HP 1090 HPLC.

T_{g} values were determined by differential scanning calorimetry using a PERKIN ELMER DSC7 using a ½ Δ Cp method with a heating ramp of 20 °C/minute

Transmission measurements were obtained using a HP 8453 UV-vis spectrophotometer at 630 nm. The values were not corrected for scattering at the surface of the parts.

In the examples below, the percentages identified in the compositions are weight percentages, unless noted otherwise. "CS" indicates chainstopper in mole% paracumylphenol.

### EXAMPLES 1-4

In Examples 1-4 the materials were successfully extruded on a 28mm twin screw extruder equipped with 6 barrels, a 2-holed die and a mild PC screw. The BCC 7% CS was synthesized by an interfacial process and had a "fluffy" consistency which made extrusion challenging. However, typical stable processing conditions included screw RPM of 200-300, and barrel temperatures at RT/100/240/260/260/260C. Full vacuum was pulled at vacuum cent located at barrel #5. Melt temperature at the die as measured by a melt probe varied from 282-285 C. Material was processed at 201bs/hr, at 60-65% torque.

In Examples 1-4, SEM analysis was used to determine the miscibililty of BCC and 1) LEXAN SP or "SP" manufactured by GENERAL ELECTRIC COMPANY, a copolycarbonate comprising about 9 mole% residues of DDDA and about 91 mole% residues of BPA and 2) a homopolycarbonate comprising residues of BPA, referred to below as "BPA"

**Table 1:**

| Specimens Examined | | | |
|---|---|---|---|
| Example | Material | Mw (K g/mol PS standard) | Mn (K g/mol PS standard) |
| 1 | 75wt% BCC /25wt% SP blend | 32.42 | 13.88 |
| 2 | 50wt% BCC /50wt% SP blend | 32.59 | 14.02 |
| 3 | 50wt% BCC 150wt% BPA-PC blend | 36.28 | 15.19 |
| 4 | 50wt% BCC /50wt% BPA-PC blend | 32.40 | 15.75 |
| Controls: BPA and BCC homopolymers, BCC / BPA copolymer | | | |

Evidence of phase separation or immiscible phases was investigated:

### Specimen Preparation and Microscopy:

A small portion of each disk was coated with epoxy on both sides to create a more rigid block for sectioning; the epoxy was trimmed away near the sectioned area. Thin sections were cut at room temperature with a diamond knife on an ultramicrotome. Random areas were selected for sectioning; typical section thicknesses were 80 nm to 100 nm. Sections on EM grids were stained with RuO₄ vapor to differentiate any potential immiscible phases; staining times were varied by an order of magnitude. A few sections of sample A were stained with OsO₄ to see if this would lead to small contrast variations. Since OsO₄ staining was a "long shot", it was not attempted with the other specimens. The stained specimens were examined in the Philips CM 100 TEM operated at 100KV.

### Observations:

No contrast indicative of immiscible phases was observed in the first four specimens. Under the conditions of analysis, dispersed phases from 100A to 20µm in diameter should have been visible. Negatives were taken of specimens (A) and (D) to insure that very weak contrast would not be missed. The negatives did not show any phase separation (even with a good imagination) and were thus not printed.

We have previously observed weak phase separation for blends of polymers with identical repeat units but molecular weight differences of a factor of 2. We have also observed very definite phase separation for blends of polymers with the same functionality but slightly different repeat units (for example methyl methacrylate and ethyl methacrylate blends or SBI/BPA copolymer and BPA blends). In those cases the strongest contrast was usually observed at the phase boundaries.

From the lack of contrast in these specimens and previous experience, we concluded that blends example 1 through 4 are completely miscible.

### EXAMPLES 5-13

In examples 5-13, BCC homopolymer and BPA polycarbonate, either PC105 or PC 120, both manufactured by GENERAL ELECTRIC, were premixed or cofed into a 28mm WP extruder equipped with a mild PC screw and extruded at barrel temperatures of about 260 ° C to about 280 ° C. In these examples, no catalyst was used. The resulting pellets were then injection molded into 2 inch by 2 1/8 inch plaques. Transmission measurements were obtained using a HP CHEMSTATION UV-VIS spectrophotometer at 630 nm. No phase separation was observed as shown by the transmission data below. Example 6 is a comparative example.

**Table 2**

| EXAMPLE | COMPOSITION | %Transmission |
|---|---|---|
| 5 (comparative) | 100% BCC | 88.32 |
| 6 | 0.2% BCC (5% feedstock cofed with PC 105) | 73.09 |
| 7 | 0.5% BCC (5% feedstock cofed with PC105) | 81.42 |
| 8 | 1% BCC (5% feedstock cofed with PC 105) | 87.05 |
| 9 | 2% BCC (5% feedstock cofed with PC 105) | 86.29 |
| 10 | 5% BCC feedstock (BCC mixed with PC105) | 85.00 |
| 11 | 5% BCC mixed in bag w/PC105 | 79.49 |
| 12 | 10% BCC mix in bag with PC 105 | 81.47 |
| 13 | 10% BCC mix in bag with PC 120 | 85.49 |

### EXAMPLES 14-17

In Examples 14-17, the miscibility of BCC with BPA polycarbonate was further observed. BCC polymer and BPA polycarbonate, grade PC 120 manufacture by GENERAL ELECTRIC, were premixed and fed into a 28 mm WP extruder equipped with a mild PC screw and extruded at barrel temperature of about 260 ° C to about 280 ° C. The amount of catalyst (tetrabutyl phosphonium tetraphenyl borate) was varied from about 0 to about 300 ppm. The efficiency of the catalyst to degrade molecular weight via hydrolysis was observed by GPC. C₁₃ NMR revealed that very little transesterification occurred during the residence time in the extruder. The resulting pellets were then injection molded into tensile bars. Transmission measurements were obtained using a HP CHEMSTATION UV-VIS spectrophotomer at 630 nm. No phase separation was seen as is evident by the high transmission data.

**Table 3**

| Example | Composition | Mw | Mn | Tg | % tansmission at 630 nm |
|---|---|---|---|---|---|
| 14 (comparative | BPA homopolycarbonate (LEXAN 1050C) | 31,200 | 14,000 | 142 | 80.7 |
| 15 (comparative | BCC hompolycarbonate 300 ppm catalyst | 25,700 | 11.500 | 136 | 76.5 |
| 16 | BCC:BPA 50:50; 150 ppm catalyst | 35,900 | 15,900 | 145 | 87.7 |
| 17 | BCC:BPA; 150 ppm catalyst | | | 143 | 82.6 |

### EXAMPLES 18-35

In Examples 18-35, the miscibility of BCC with BPA polycarbonate was further observed. BCC homopolycarbonate (BCC) and BPA homopolycarbonate (BPA) were premixed and fed into a 28 mm WP extruder equipped with a mild PC screw and extruded at barrel temperatures of form about 260 ° C to about 280 ° C. For examples 18-23, BCC (7 mole% chainstopper, Mw of 28,000 grams/mole) and BPA (LEXAN OQ 1050C, made by GENERAL ELECTRIC) were premixed and extruded. For examples 24-29, BCC (6 mole% chainstop, Mw of 32,000 grams/mole) and BPA ( a mixture of LEXAN OQ 1050 C and LEXAN ML 5521, both made by GENERAL ELECTRIC) were premixed and extruded. For samples containing catalysts (indicated in the table below) 150 ppm tetrabutyl phosphonium tetraphenyl borate were added to the polymer prior to extrusion. The resulting pellets were then injection molded into disks. No phase separation was seen as is evident by the high transmission data.

**Table 4**

| Example | Composition | Mw | Mn | Tg | % Transmission at 630 nm |
|---|---|---|---|---|---|
| 18 | 0:100; BCC:BPA, catalyst | 27,400 | 13,100 | 142.7 | 84.3 |
| 19 | 0:100; BCC:BPA, no catalyst | 27,800 | 13,200 | 143.1 | 85.4 |
| 20 | 25:75; BCC:BPA, catalyst | 27.300 | 12,900 | 142.1 | 85.4 |
| 21 | 50:50; BCC:BPA, catalyst | 26,700 | 12,400 | 141.6 | 84.3 |
| 22 | 50:50; BCC:BPA, no catalyst | 26,400 | 12,500 | 141.3 | |
| 23 | 75:25; BCC:BPA, catalyst | 26,200 | 12,200 | 141.2 | 84.2 |
| 24 | 0:100; BCC:BPA, catalyst | 28,900 | 13,600 | 144.2 | 85.1 |
| 25 | 0:100; BCC:BPA, no catalyst | 29,700 | 13,800 | 144.9 | 85.3 |
| 26 | 25:75; BCC:BPA, catalyst | 29,300 | 13,500 | 143.7 | 84.7 |
| 27 | 50:50; BCC:BPA, catalyst | 28,600 | 13,100 | 142.5 | 84.5 |
| 28 | 50:50; BCC: BPA, no catalyst | 29,500 | 13,400 | 143.9 | |
| 29 | 75:25: BCC:BPA, catalyst | 27,300 | 12,600 | 142.2 | 83.9 |
| 30 | 0:100; BCC:BPA, catalyst | 33,100 | 14,900 | 146.9 | 82.9 |
| 31 | 0:100; BCC:BPA, no catalyst | 32,700 | 14,700 | 146.7 | 83.2 |
| 32 | 25:75; BCC:BPA, catalyst | 32,300 | 14,500 | 145.5 | 83.6 |
| 33 | 50:50; BCC:BPA, catalyst | 32.100 | 14,300 | 143.9 | 83.5 |
| 34 | 50:50; BCC:BPA, no catalyst | 32,400 | 14,400 | 145.6 | |
| 35 | 50:50; BCC:BPA, catalyst | 30.900 | 14,100 | 143.8 | 84.0 |

### EXAMPLES 36-47

In Examples 36-47, BPA polycarbonate (LEXAN PC 120) or BCC polymer (7 mol% chainstop) and LEXAN SP1010 copolyestercarbonate (92:8 mol% BPA:DDDA) were premixed in a HENSCHEL mixer and fed into a 28 mm WP extruder equipped with a mild PC screw and extruded at barrel temperature of from about 260 ° C to about 280 °C. The amount of catalyst (tetrabutyl phosphonium tetraphenyl borate) was varied from about 0 to about 300 ppm. The resulting pellets were then injection molded into tensile bars using an ENGEL 30 ton injection molding machine. Catalyst efficiency was investigated by use of GPC and C₁₃ NMR. Molecular weights were generally insensitive to the amount of catalysts. This suggests that very little hydrolysis occurred during extrusion. In addition, C₁₃ NMR revealed that very little transesterification (copolymerization) occurred during the residence time in the extruder. No phase separation was seen as is evident by the high transmission data. This, together with the single Tg data indicates that both BPA polycarbonate and BCC polycarbonate are miscible with LEXAN SP.

**Table 5**

| EXAMPLE | COMPOSITION | Mw | Mn | Tg | % Transmission at 630 nm |
|---|---|---|---|---|---|
| 36 (comparative | BPA (LEXAN 1050C) | 31,200 | 14,000 | 142 | 80.7 |
| 37 (comparative) | BPA/DDA copolyestercarbonate) | 54,600 | 20,900 | 126 | |
| 38 (comparative) | BCC | 25,200 | 11,700 | 126.5 | |
| 39 | BCC, 300 ppm catalyst | 25,700 | 11,500 | 136.4 | 76.5 |
| 40 | BPA: SP1010; 50:50, no catalyst | 45,400 | 18,600 | 140.1 | 83 |
| 41 | BPA:SP1010; 50:50, 150 ppm catalyst | 43,800 | 18,300 | 138.2 | 86.3 |
| 42 | HCC:SP1010; 50:50, no catalyst | 39,300 | 14,700 | 133.7 | 78.2 |
| 43 | BCC:SP1010; 95:5; 150 ppm catalyst | | | 140.4 | 82.3 |
| 44 | BCC:SP1010; 75:25; 150 ppm catalyst | 39,500 | 16,200 | 138.7 | 83.1 |
| 45 | HCC:SP1010; 50:50; 150 ppm catalyst | 44,300 | 17,700 | 135.4 | 80.5 |
| 46 | BCC:SP1010; 50:50; 150 ppm catalyst | 40,000 | 15,200 | 135.2 | 83.1 |
| 47 | BCC:SP1010; 50:50; 300 ppm catalyst | 40.000 | 15.400 | 133.5 | 82.2 |

### EXAMPLES 48-61

In Examples 48-61, BPA polycarbonate (LEXAN PC120) or BCC polymer and a polyestercarbonate (LEXAN SP 1010 (also referred to as SP), 92 mole% BPA/8 mol% DDA) were premixed in a HENSCHEL mixer and fed into a 28 mm WP extruder equipped with a mild PC screw and extruded at barrel temperatures of from about 260 °C to about 280 ° C. The resulting pellets were then injection molded into tensile bars using an ENGEL 30 ton injection molding machine. The tensile bars were double-notched using a single tooth notcher, then annealed for 5 hours at a temperature approximately 85% of the glass transition temperature of the sample. The samples were then pulled using an INSTRON universal tester at a rate of 0.05"/minute to determine values of energy to failure. Values of melt flow index (MFI) were obtained using a TINIUS-OLSEN plastimeter at 250 ° C, 1.2 kgf. The tables below show that values of energy failure (intrinsic ductility) for materials containing polyestercarbonate are significantly higher than those for BCC homopolymer. For example, Example 61 (50:50 BCC:LEXAN SP 1010) has a comparable Mw and MFI to that for Example 52 (BCC homopolymer, 5 mole% chainstopper), yet has an energy failure of about 160% higher that that for EXAMPLE 52.

**Table 6**

| EXAMPLE | COMPOSITION | Mw | Mn | Tg | Melt flow index | Energy (Ibf-in) |
|---|---|---|---|---|---|---|
| 48 (comparative) | LEXAN 1050C | 31,200 | 14,000 | 142 | 11.2 | 0.6 |
| 49 (comparative) | LEXAN SP1010 (8 mol% DDDA) | 54,600 | 20,900 | 126 | 11.6 | (7-8 estimated) |
| 50 (comparative) | LEXAN SP RL7486 (8 mol% DDDA) | | | 126 | 12.3 | 7.5 |
| 51 (comparative) | BCC homopolymer (7 mol% CS) | 25,200 | 11,700 | 139 | 3.4 | 0.5 |
| 52 (comparative) | BCC hompolymer (5 mol% CS) | 38,000 | 17,700 | 140 | <3 (estimated) | 2.7 |
| 53 | BCC; 300 ppm catalyst | 25,700 | 11,500 | 136.4 | | 0.3 |
| 54 | BPA:SP101 0; 50:50; no catalyst | 45,400 | 18,600 | 140.1 | 3.0 | 10.8 |
| 55 | BPA:SP 1010; 50:50; 150 ppm catalyst | 43,800 | 18,300 | 138.2 | 3.0 | 10.6 |
| 56 | BCC:SP101 0; 50:50; no catatyst | 39.300 | 14,700 | 133.7 | 2.5 | 5.2 |
| 57 | BCC:SP1010 ; 95:5; 150 ppm catalyst | | | 140.4 | | 3.5 |
| 58 | BCC:SP101 0; 75:25; 150 ppm catalyst | 39,500 | 16,200 | 138.7 | 1.1 | 5.3 |
| 59 | BCC:SP101 0; 50:50; 150 ppm catalyst | 44,300 | 17,700 | 135.4 | 1.3 | 8.4 |
| 60 | BCC:SP1010; 50:50; 150 ppm catalyst | 40 | 15,200 | 135.2 | 2.5 | 5.6 |
| 61 | BCC:SP101 0; 50:50; 300 ppm catalyst | 40 | 15.4 | 133.5 | 2.6 | 7.1 |

### EXAMPLES 62-69

In Examples 62-69, solvent cast films were prepared that exhibit single Tgs and exhibit high values of transmission at 630 nm. Solutions of high molecular weight BPA polycarbonate (LEXAN PC 131, Mw of 67,000) were dissolved in chloroform and mixed in different ratios with a solution of BCC (Mw 32,000). These solutions were then case on a glass slide and dried at room temperature. The Tgs were found to be monotonic with a reasonable agreement with the Fox-Flory prediction. (1/Tg=w1/Tg1 +w2/Tg2)
The procedure was repeated for LEXAN SP 1010:BCC. For the LEXAN SP:BCC pair, the TGs were monotonic, indication miscibility, but showing some positive deviation from the Fox-Flory prediction. Both sets of films were optically clear by visual observation as long as the rate of evaporation was controlled. Fast evaporation leads to clouding since the bubbles get trapped in the film. Films of controlled thickness (about 0.03 mm) were prepared by depositing equal amounts of polymer solution (1ml) onto a glass slide circularly constrained by a gasket. 20,40,60,80 and 100% blends of BPA polycarbonate (LEXAN PC131):BCC and LEXAN SP:BCC blends were tested. The transmission for all the blends was greater than 98% at 630 nm and 95% at 450 nm. These examples support the conclusion that the polymers are miscible, and that miscibility is not a result of compatabilization resulting from transesterification products.

**Table 7**

| Example | Composition | Tg |
|---|---|---|
| 62 | BPA:BCC; 20:80 | 139 |
| 63 | BPA:BCC; 40:60 | 142 |
| 64 | BPA:BCC; 60:40 | 143.5 |
| 65 | BPA:BCC; 80:20 | 146 |
| 66 | BPA:SP; 20:80 | 126 |
| 67 | BPA:SP; 40:60 | 130 |
| 68 | BPA:SP; 60:40 | 133 |
| 69 | BPA:SP; 80:20 | 134.5 |

### Example 70:

In Examples 70, spin coated films were prepared that exhibit high values of transmission at 630 nm. Solutions of BPA polycarbonate (LEXAN OQ 1050c, Mw of 29,500): BCC (Mw 31,000) were prepared at varying ratios of BPA-PC:BCC by dissolving 10wt% polymer in chloroform. These solutions were then spin coated on a glass slide and dried at room temperature. Films of controlled thickness (about 0.002 mm) were prepared by depositing equal amounts of polymer solution (1ml) onto a glass slide and adjusting the spin speed. All films were optically clear by visual observation. 0,10,20,40,60,80 and 100% blends of BPA polycarbonate (LEXAN OQ1050C). The transmission all the blends at 630 nm and the thickness of the films is shown in FIGURE 1. These examples support the conclusion that the polymers are miscible, and that miscibility is not a result of compatabilization resulting from transesterification products.

The invention has been described in detail with particular reference, to preferred embodiments thereof, but it will be understood that variations and modifications can be effected within the spirit and scope of the invention.

## Claims

1. A clear blend composition comprising:
A) from 1 to 99% by weight of a first polycarbonate comprising structural units having the formula (I) 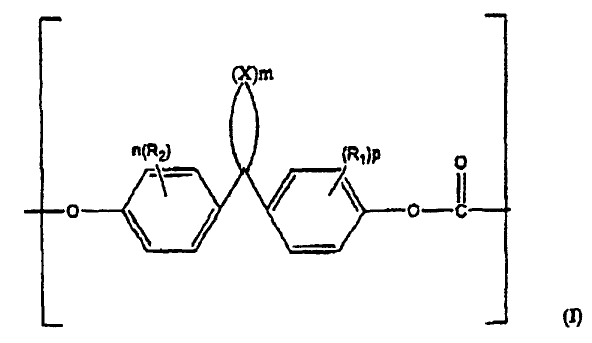 where R₁ and R₂ are independently selected from the group consisting of C₁-C₆ alkyl;
X represents CH₂;
m is an integer from 4 to 7;
n is an integer from 1 to 4; and
p is an integer from 1 to 4
with the proviso that at least one of R₁ or R₂ is in the 3 or 3' position; and wherein the structural units of formula (I) comprise from 10 mol% to about 100 mol% of the first polycarbonate; and
B) from 1 to 99% by weight of a second polycarbonate comprising structural units having the formula (II) 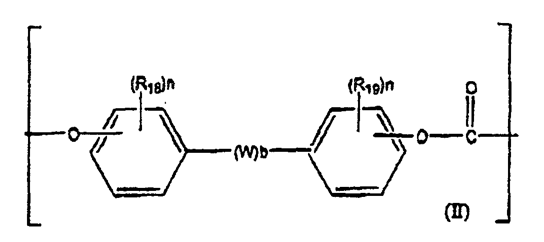 where
R₁₈ is independently selected from the group consisting of halogen, hydrogen, monovalent C₁-C₆ hydrocarbon, monovalent C₁-C₆ hydrocarbonoxy radicals,
R₁₉ is independently selected from the group consisting of halogen, hydrogen, monovalent C₁-C₆ hydrocarbon, and monovalent C₁-C₆ hydrocarbonoxy radicals;
W is selected from the group consisting of substituted or unsubstituted divalent C₁-C₁₈ hydrocarbon radicals,
-S-, -S-S-, -O-, 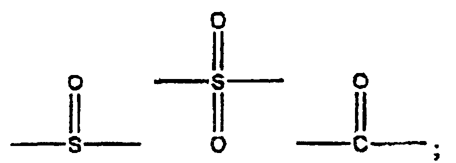 each n is independently selected from integers having a value of from 0 to 4 inclusive; and b is zero or one; wherein the structural units (II) comprise at least 10 mol% of the second polycarbonate;
wherein the second polycarbonate further comprises from 1 to 99 mol% of Structural units having the formula (III) 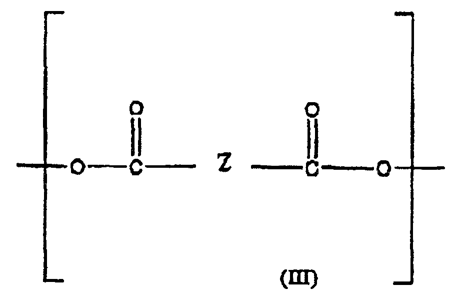 wherein Z is a C₁-C₄₀ branched or unbranched alkyl or branched or unbranched cycloalkyl; and
wherein the total weight percent of first polycarbonate (A) and second polycarbonate (B) is equal to 100 weight percent.

2. The clear blend of claim 1, wherein component A) comprises from 90 to 100 mol% of a polycarbonate having structural units: 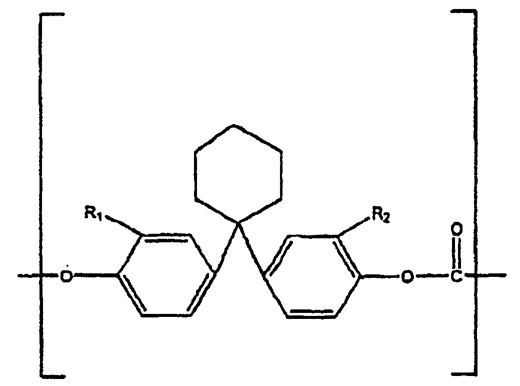 where R₁ and R₂ ara CH₃.

3. The clear blend composition according to claim 1, wherein the second polycarbonate comprises from 90 to 100 mole% residues of BPA.

4. The clear blend composition according to claim 1, wherein the second polycarbonate consists essentially of residues derived from BPA and structural units having the formula III 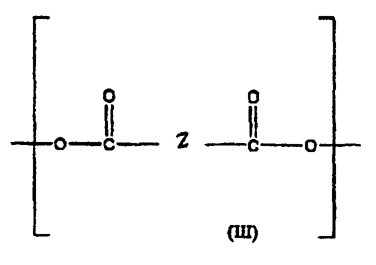 wherein Z is a C₁-C₄₀ branched or unbranched alkyl or branched or unbranched cycloalkyl.

5. The clear blend composition according to claim 4, wherein said structural units III are derived from one or more diacids selected from the group consisting of dodecanedioic acid, sebacic acid, adipic acid, octadecanedioic acid, octadec-9-enedioic acid, 9-carboxyoctadecanoic acid and 10-carboxyoctadecanoic acid.

6. The clear blend according to claim 1, wherein first polycarbonate consists essentially of residues derived from BCC, and said second polycarbonate consists essentially of residues derived from BPA and dodecanedioic acid.

7. A method of preparing a clear blend composition comprising the step of coextruding
A) from 1 to 99% by weight of a first polycarbonate comprising structural units having the formula (I) 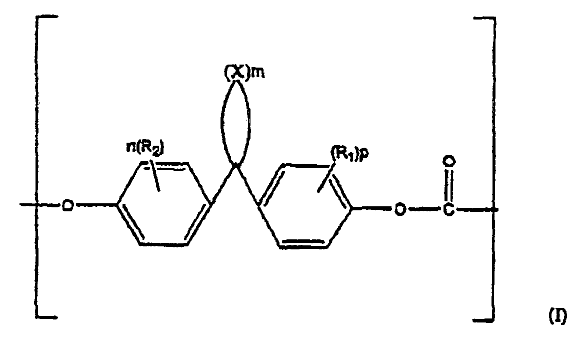 where R₁ and R₂ are independently selected from the group consisting of C₁-C_{6.} alkyl;
X represents CH₂;
m is an integer from 4 to 7;
n is an integer from 1 to 4; and
p is an integer from 1 to 4
with the proviso that at least one of R₁ or R₂ is in the 3 or 3' position; and wherein the structural units of formula (I) comprise from 10 mol% to about 100 mol% of the first polycarbonate; and
B) from 1 to 99% by weight of a second polycarbonate comprising structural units having the formula (II) 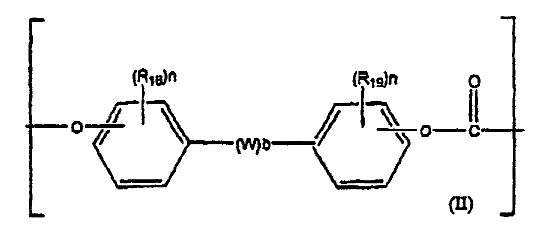 where
R₁₈ is independently selected from the group consisting of halogen, hydrogen, monovalent C₁ -C₆ hydrocarbon, monovalent C₁-C₆ hydrocarbonoxy radicals,
R₁₉ is independently selected from the group consisting of halogen, hydrogen, monovalent C₁-C₆ hydrocarbon, and monovalent C₁-C₆ hydrocarbonoxy radicals;
W is selected from the group consisting of substituted or unsubstituted divalent C₁-C₁₈ hydrocarbon radicals,
-S-, -S-S-, -O-, 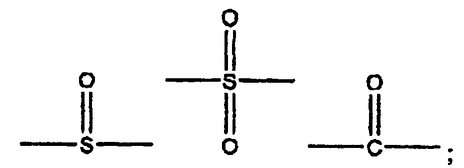 each n is independently selected from integers having a value of from 0 to 4 inclusive; and b is zero or one; wherein the structural units (II) comprise at least 10 mol% of the second polycarbonate;
wherein the second polycarbonate further comprises form 1 to 99 mol% of structural units having the formula (III) 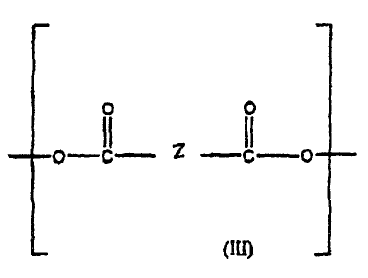 wherein Z is a C₁-C₄₀ branched or unbranched alkyl or branched or unbranched cycloalkyl; and
wherein the total weight percent of first polycarbonate (A) and second polycarbonate (B) is equal to 100 weight percent.

8. The method of claim 7, wherein the coextrusion is conducted in the absence of a catalyst.

9. The method of claim 7, wherein component A) comprises from 90 to 100 mol% of a polycarbonate having structural units: 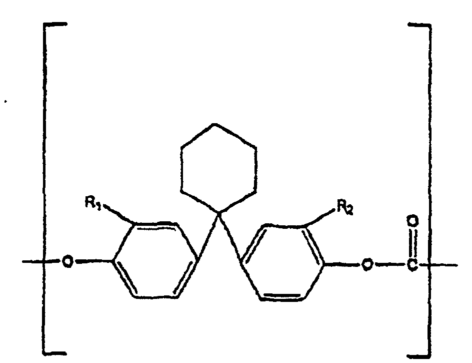 where R₁ and R₂ are CH₃.

10. A method according to claim 7, wherein the second polycarbonate comprises from 90 to 100 mole% residues of BPA.

11. The method according to claim 7, wherein the second polycarbonate consists essentially of residues derived from BPA and structural units having the formula III 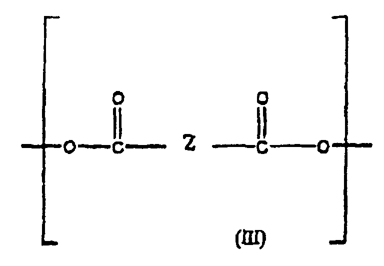 wherein Z is a C₁-C₄₀ branched or unbranched alkyl or branched or unbranched cycloalkyl.

## Patentansprüche

1. Eine klare Blendzusammensetzung umfassend:
A) 1 bis 99 Gew.-% eines ersten Polycarbonats umfassend Struktureinheiten mit der Formel (I) 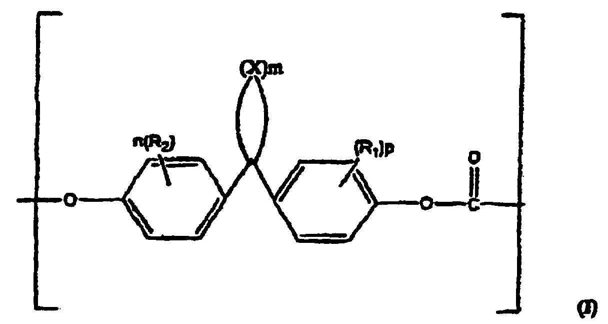 worin R₁ und R₂ unabhängig ausgewählt sind aus der Gruppe bestehend aus C₁-C₆ Alkyl;
X CH₂ darstellt;
m eine ganze Zahl vom 4 bis 7 ist;
n eine ganze Zahl von 1 bis 4 ist; und
p eine ganze Zahl von 1 bis 4 ist
mit der Bedingung, dass wenigstens einer der Reste R₁ oder R₂ in der 3-oder.3'-Position ist; und wobei die Struktureinheiten der Formel (I) von 10 mol % bis etwa 100 mol % des ersten Polycarbonats ausmachen; und
B) 1 bis 99 Gew.- % eines zweiten Polycarbonats umfassend Struktureinheiten mit der Formel (II) 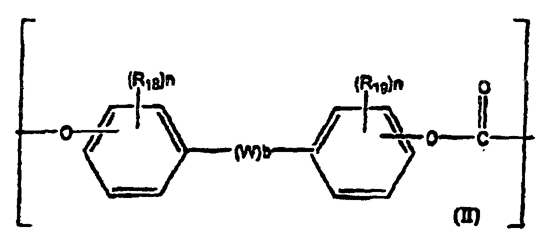 worin
R₁₈ unabhängig ausgewählt ist aus der Gruppe bestehend aus Halogen, Wasserstoff, monovalentem C₁-C₆ Kohlenwasserstoff, monovalenten C₁-C₆ Hydrocarbonoxyresten,
R₁₉ unabhängig ausgewählt ist aus der Gruppe bestehend aus Halogen, Wasserstoff, monovalentem C₁-C₆ Kohlenwasserstoff und monovalenten C₁-C₆, Hydrocarbonoxyresten;
W ausgewählt ist aus der Gruppe bestehend aus substituierten oder unsubstituierten divalenten C₁-C₁₈ Kohlenwasserstoffresten,
-S-, -S-S- , -O-, 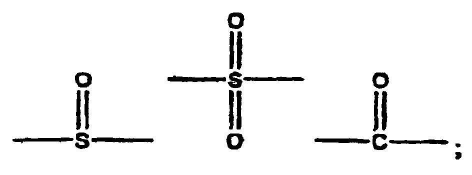
worin n unabhängig ausgewählt ist aus den ganzen Zahlen, die einen Wert aufweisen von 0 bis 4 einschließlich; und b null oder eins ist; wobei die Struktureinheiten (II) wenigstens 10 mol % des zweiten Polycarbonats ausmachen;
worin das zweite Polycarbonat weiterhin umfasst 1 bis 99 mol % Struktureinheiten mit der Formel (III) 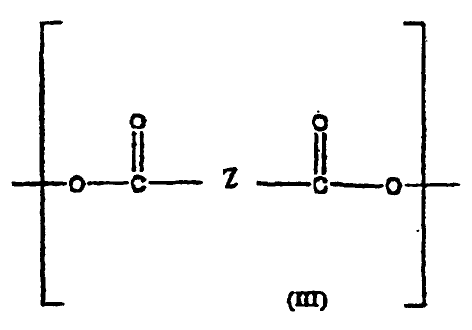 worin Z ein verzweigtes oder unverzweigtes C₁-C₄₀-Alkyl oder verzweigtes oder unverzweigtes Cycloalkyl ist; und
wobei die gesamten Gewichtsprozente des ersten Polycarbonats (A) und des zweiten Polycarbonats (B) gleich 100 Gew.-% sind.

2. Der klare Blend gemäß Anspruch 1, worin Bestandteil (A) von 90 bis 100 mol% eines Polycarbonats umfasst mit den Struktureinheiten: 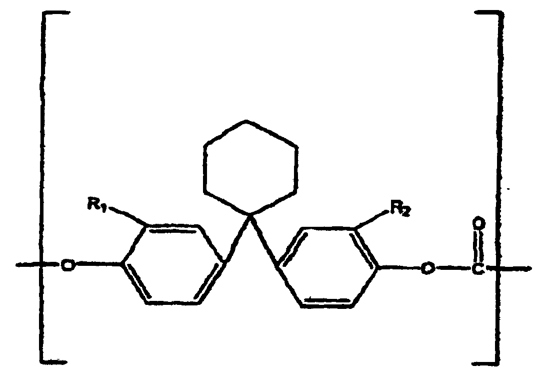 wobei R₁ und R₂ CH₃ sind.

3. Die klare Blendzusammensetzung gemäß Anspruch 1, **dadurch gekennzeichnet, dass** das zweite Polycarbonat 90 bis 100 mol% Reste des BPA umfasst.

4. Die klare Blendzusammensetzung gemäß Anspruch 1, **dadurch gekennzeichnet, dass** das zweite Polycarbonat im Wesentlichen aus Resten besteht, die vom BPA abgeleitet sind, und Struktureinheiten, die die Formel (III) haben 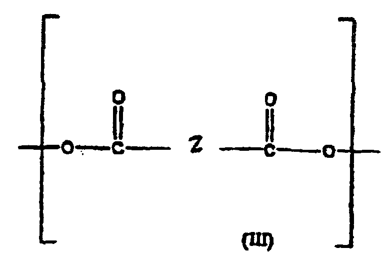 worin Z verzweigtes oder unverzweigtes C₁-C₄₀-Alkyl oder verzweigtes oder unverzweigtes Cycloalkyl ist.

5. Die klare Blendzusammensetzung gemäß Anspruch 4, **dadurch gekennzeichnet, dass** die Struktureinheiten III sich von einer oder mehreren Disäuren ableiten ausgewählt aus der Gruppe bestehend aus Dodecandicarbonsäure, Sebacinsäure, Adipinsäure, Octadecandicarbonsäure, Octadec-9-endicarbonsäure, 9-Carboxyoctadecansäure und 10-Carboxyoctadecansäure.

6. Der klare Blend gemäß Anspruch 1, **dadurch gekennzeichnet, dass** das erste Polycarbonat im Wesentlichen aus Resten besteht, die sich vom BCC ableiten und das zweite Polycarbonat im Wesentlichen aus Resten besteht, die sich vom BPY und Dodecandicarbonsäure ableiten.

7. Verfahren zur Herstellung einer klaren Blendzusammensetzung, welches Verfahren den Schritt umfasst, dass man koextrudiert
A) 1. bis 99 Gew.-% eines ersten Polycarbonats aufweisend Struktureinheiten mit der Formel (I) 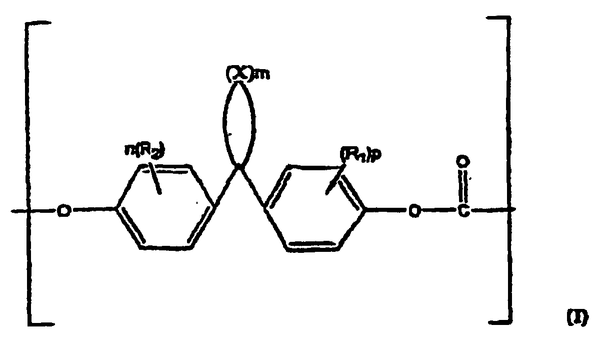 worin R₁ und R₂ unabhängig ausgewählt sind aus der Gruppe bestehend aus C₁-C₆-Alkyl;
X CH₂ darstellt;
m eine ganze Zahl von 4 bis 7 ist;
n eine ganze Zahl von 1 bis 4 ist; und
p eine ganze Zahl von 1 bis 4 ist
mit der Einschränkung, dass wenigstens einer der Reste R₁ oder R₂ in der 3- oder 3'-Position ist; und wobei die Struktureinheiten der Formel (I) von 10 mol% bis etwa 100 mol% des Polycarbonats ausmachen; und
B) von 1 bis 99 Gew.-% eines zweiten Polycarbonats umfassend Struktureinheiten mit der Formel (II) 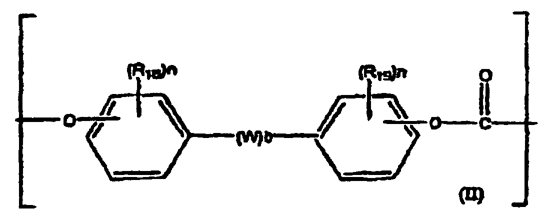 worin R₁₈ unabhängig ausgewählt ist aus der Gruppe bestehend aus Halogen, Wasserstoff, monovalentem C₁-C₆ Kohlenwasserstoff, monovalenten C₁-C₆ Hydrocarbonoxyresten,
R₁₉ ausgewählt ist aus der Gruppe bestehend aus Halogen, Wasserstoff, monovalentem C₁-C₆ Kohlenwasserstoff und monovalenten C₁-C₆ Hydrocarbonoxyresten:
W ausgewählt ist aus der Gruppe bestehend aus substiutierten oder unsubstituierten divalenten C₁-C₁₈ Kohlenwasserstoffresten,
-S-, -S-S-, -O- 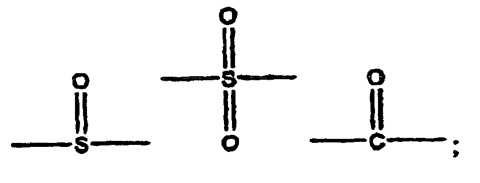 jedes n unabhängig ausgewählt ist aus ganzen Zahlen mit einem Wert von 0 bis 4 einschließlich; und b null oder eins ist; wobei die Struktureinheiten (II) wenigstens 10 mol % des zweiten Polycarbonats ausmachen;
worin das zweite Polycarbonat weiterhin von 1 bis 99 mol % Struktureinheiten mit der Formel (III) aufweist 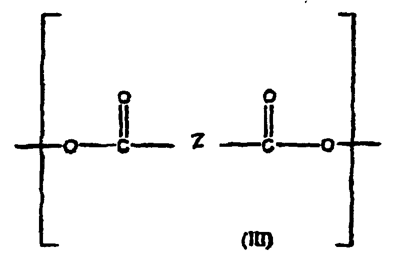 worin Z verzweigtes oder unverzweigtes C₁-C₄₀-Alkyl ist oder verzweigtes oder unverzweigtes Cycloalkyl; und
worin die gesamten Gewichtsprozente des ersten Polycarbonats (A) und des zweiten Polycarbonats (B) gleich 100 Gew.-% sind.

8. Verfahren nach Anspruch 7, **dadurch gekennzeichnet, dass** die Koextrusion in Abwesenheit eines Katalysators ausgeführt wird.

9. Verfahren nach Anspruch 7, **dadurch gekennzeichnet, dass** die Komponente A) 90 bis 100 mol % eines Polycarbonats umfasst mit den Struktureinheiten: 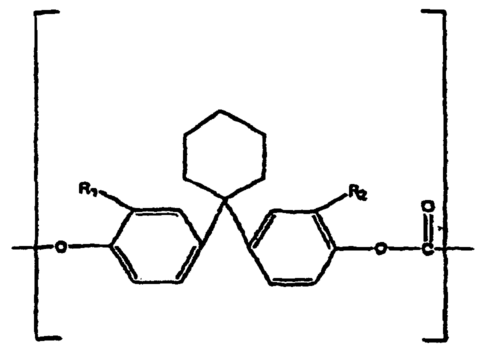 worin R₁ und R₂ CH₃ sind.

10. Verfahren nach Anspruch 7, **dadurch gekennzeichnet, dass** das zweite Polycarbonat von 90 bis 100 mol% Reste des BPA umfasst.

11. Verfahren nach Anspruch 7, **dadurch gekennzeichnet, dass** das zweite Polycarbonat im Wesentlichen aus Resten besteht, die sich vom BPA ableiten und Struktureinheiten, die die Formel III haben 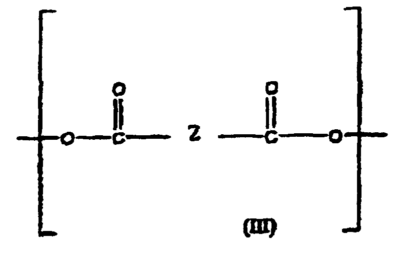 worin Z ein verzweigtes oder unverzweigtes C₁-C₄₀-Alkyl oder verzweigtes oder unverzweigtes Cycloalkyl ist.

## Revendications

1. Composition qui est un mélange transparent comprenant :
A) de 1 à 99 % en poids d'un premier polycarbonate qui comporte des motifs structuraux de formule (I) : 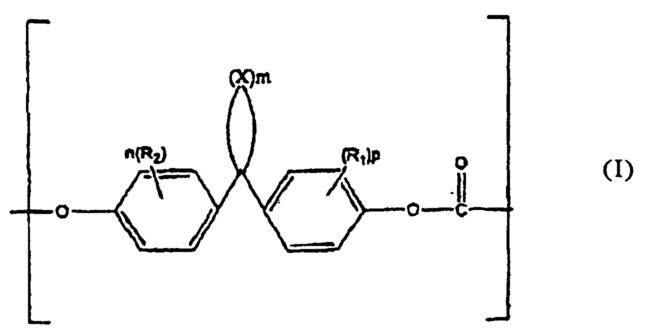 dans laquelle
R₁ et R₂ représentent chacun, indépendamment, un groupe alkyle en C₁₋₆,
X représente -CH₂-,
m représente un nombre entier qui vaut de 4 à 7,
n représente un nombre entier qui vaut de 1 à 4,
et p représente un nombre entier qui vaut de 1 à 4,
sous réserve qu'au moins l'un des groupes représentés par R₁ ou R₂
soit placé en position 3 ou 3',
lesquels motifs structuraux de formule (I) représentent de 10 à environ 100 % en moles de ce premier polycarbonate ;
B) et de 1 à 99 % en poids d'un deuxième polycarbonate qui comporte des motifs structuraux de formule (II) : 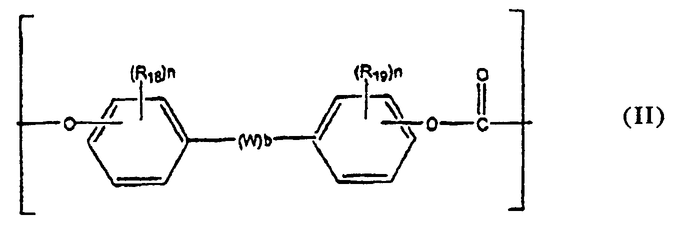 dans laquelle
les R₁₈ sont choisis, indépendamment, dans l'ensemble formé par les atomes d'hydrogène et d'halogène et les groupes hydrocarbonés monovalents en C₁₋₆ et (hydrocarboné monovalent en C₁₋₆)-oxy,
les R₁₉ sont choisis, indépendamment, dans l'ensemble formé par les atomes d'hydrogène et d'halogène et les groupes hydrocarbonés monovalents en C₁₋₆ et (hydrocarboné monovalent en C₁₋₆)-oxy,
W est choisi dans l'ensemble formé par les groupes hydrocarbonés divalents en C₁₋₁₈, substitués ou non, et les chaînons -S-, -S-S-, -O-, -S(=O)-, -S(=O)₂- et -C(=O)-,
chaque n est choisi indépendamment parmi les nombres entiers valant de 0 à 4, limites comprises,
et b vaut 0 ou 1,
lesquels motifs structuraux de formule (II) représentent au moins 10 % en moles de ce deuxième polycarbonate,
lequel deuxième polycarbonate comporte en outre de 1 à 99 % en moles de motifs structuraux de formule (III) 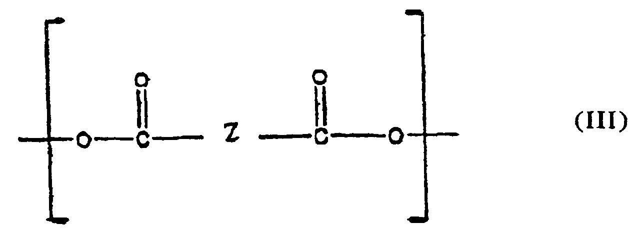 dans laquelle Z représente un groupe alkyle, ramifié ou non, ou cycloalkyle, ramifié ou non, en C₁₋₄₀ ;
la somme des pourcentages pondéraux du premier polycarbonate (A) et du deuxième polycarbonate (B) étant égale à 100 % en poids.

2. Mélange transparent conforme à la revendication 1, dans lequel le composant (A) est constitué, pour 90 à 100 % en moles, d'un polycarbonate dont les motifs structuraux ont la formule suivante : 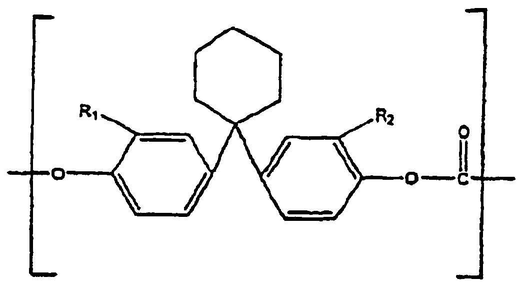 dans laquelle R₁ et R₂ représentent des groupes -CH₃.

3. Composition de mélange transparent, conforme à la revendication 1, dans laquelle le deuxième polycarbonate est constitué, pour 90 à 100 % en moles, de motifs dérivés du BPA.

4. Composition de mélange transparent, conforme à la revendication 1, dans laquelle le deuxième polycarbonate est essentiellement constitué de motifs dérivés du BPA et de motifs structuraux de formule (III) 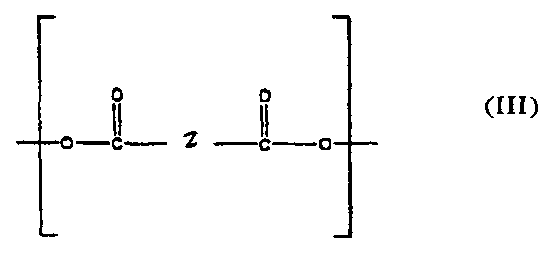 dans laquelle Z représente un groupe alkyle, ramifié ou non, ou cycloalkyle, ramifié ou non, en C₁₋₄₀.

5. Composition de mélange transparent, conforme à la revendication 4, dans laquelle lesdits motifs structuraux de formule (III) dérivent d'un ou de plusieurs diacides choisis dans l'ensemble formé par les acides dodécanedioïque, sébacique, adipique, octadécanedioïque, octadéc-9-ènedioïque, 9-carboxy-octadécanoïque et 10-carboxy-octadécanoïque.

6. Composition de mélange transparent, conforme à la revendication 1, dans laquelle le premier polycarbonate est essentiellement constitué de motifs dérivés du BCC et le deuxième polycarbonate est essentiellement constitué de motifs dérivés du BPA et de l'acide dodécanedioïque.

7. Procédé de préparation d'une composition de mélange transparent, lequel procédé comporte une étape où l'on coextrude :
A) de 1 à 99 % en poids d'un premier polycarbonate qui comporte des motifs structuraux de formule (I): 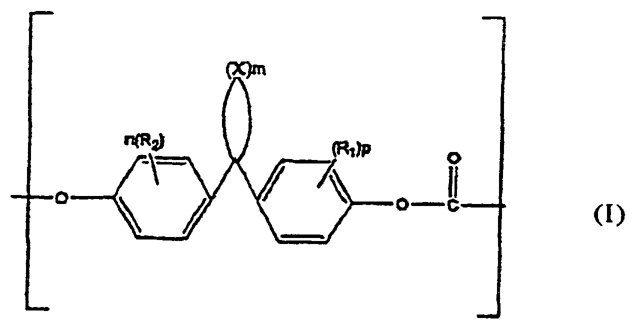 dans laquelle
R₁ et R₂ représentent chacun, indépendamment, un groupe alkyle en C₁₋₆,
X représente -CH₂-,
m représente un nombre entier qui vaut de 4 à 7,
n représente un nombre entier qui vaut de 1 à 4,
et p représente un nombre entier qui vaut de 1 à 4,
sous réserve qu'au moins l'un des groupes représentés par R₁ ou R₂ soit placé en position 3 ou 3',
lesquels motifs structuraux de formule (1) représentent de 10 à environ 100 % en moles de ce premier polycarbonate ;
B) et de 1 à 99 % en poids d'un deuxième polycarbonate qui comporte des motifs structuraux de formule (II) : 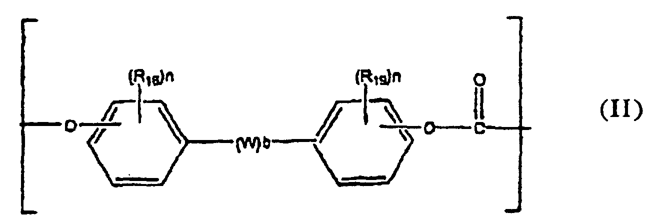 dans laquelle
les R₁₈ sont choisis, indépendamment, dans l'ensemble formé par les atomes d'hydrogène et d'halogène et les groupes hydrocarbonés monovalents en C₁₋₆ et (hydrocarboné monovalent en C₁₋₆)-oxy,
les R₁₉ sont choisis, indépendamment, dans l'ensemble formé par les atomes d'hydrogène et d'halogène et les groupes hydrocarbonés monovalents en C₁₋₆ et (hydrocarboné monovalent en C₁₋₆)-oxy,
W est choisi dans l'ensemble formé par les groupes hydrocarbonés divalents en C₁₋₁₈, substitués ou non, et les chaînons -S-, -S-S-, -O-, -S(=O)-, -S(=O)₂- et -C(=O)-,
chaque n est choisi indépendamment parmi les nombres entiers valant de 0 à 4, limites comprises,
et b vaut 0 ou 1,
lesquels motifs structuraux de formule (II) représentent au moins 10 % en moles de ce deuxième polycarbonate,
lequel deuxième polycarbonate comporte en outre de 1 à 99 % en moles de motifs structuraux de formule (III) 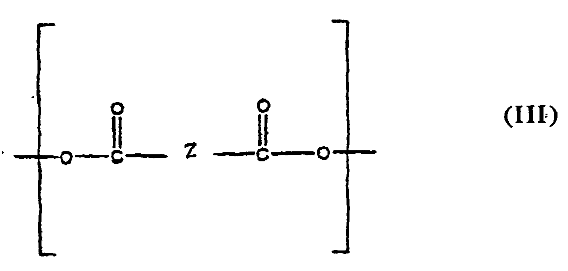 dans laquelle Z représente un groupe alkyle, ramifié ou non, ou cycloalkyle, ramifié ou non, en C₁-₄₀ ;
la somme des pourcentages pondéraux du premier polycarbonate (A) et du deuxième polycarbonate (B) étant égale à 100 % en poids.

8. Procédé conforme à la revendication 7, dans lequel on effectue la coextrusion en l'absence de tout catalyseur.

9. Procédé conforme à la revendication 7, dans lequel le composant (A) est constitué, pour 90 à 100 % en moles, d'un polycarbonate dont les motifs structuraux ont la formule suivante : 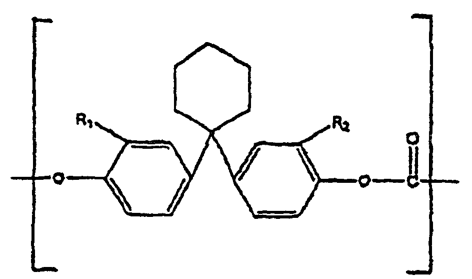 dans laquelle R₁ et R₂ représentent des groupes -CH₃.

10. Procédé conforme à la revendication 7, dans lequel le deuxième polycarbonate est constitué, pour 90 à 100 % en moles, de motifs dérivés du BPA.

11. Procédé conforme à la revendication 7, dans lequel le deuxième polycarbonate est essentiellement constitué de motifs dérivés du BPA et de motifs structuraux de formule (III) 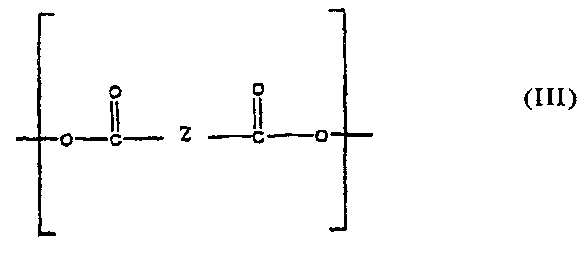 dans laquelle Z représente un groupe alkyle, ramifié ou non, ou cycloalkyle, ramifié ou non, en C₁₋₄₀.
